# DEMANDE DE BREVET EUROPEEN

(11) **EP 1 063 412 A1**
(43) Date de publication de la demande: **27.12.2000**
(21) Numéro de dépôt: 99410083.2
(22) Date de dépôt: 23.06.1999
(51) Int. Cl.: F02M 27/04, F02B 51/04

(54) **Economiseur de carburant**

(71) Demandeur: Kieffer, Serge, 74160 Saint Julien en Genevois (FR)
(72) Inventeur: Kieffer, Serge, 74160 Saint Julien en Genevois (FR)
(74) Mandataire: Gasquet, Denis

(57) **Abrégé**

Dispositif pour faire baisser la consommation d'essence, de gas-oil ou de pétrole liquéfié sur tous les types de moteurs et toutes marques confondues, caractérisé en ce qu'il comporte un tube dans lequel est logé un parallélépipède sur lequel sont collés sur chaque face des aimants et un écran protecteur formé d'une feuille magnétique arrêtant les champs magnétiques parasites vers l'extérieur du dispositif.

## Description

La présente invention concerne un dispositif magnétique destiné à faire baisser la consommation de carburant tant sur les moteurs à essence que sur les moteurs diesels ou gaz de pétrole liquéfié.

Depuis des années de nombreux produits ont été introduits sur le marché ayant pour objectif une combustion de l'essence et autres carburants plus propres.

De nombreuses études antérieures exigent la fabrication de plusieurs anneaux internes rendant de tels dispositifs difficiles à placer correctement et demandant un assemblage de pièces pouvant occasionner des cassures.

D'autres systèmes sont difficiles à installer par un seule personne parce qu'ils requièrent l'assemblage de parties séparées, et de les prendre avec une seule main pendant que l'autre essaye de maintenir les attaches.

De telles pièces détachées ont l'inconvénient d'être difficiles à monter dans une voiture ou un camion, ou les tuyaux sont parfois difficiles à atteindre. Il existe également des supports magnétiques en deux parties rattachables par des charnières pivots élastiques qui les poussent l'une vers l'autre, le montage étant installé autour du conduit de carburant, quelles que soient les tailles des conduits, ce style de fixation n'est pas fiable et ne garantit pas l'efficacité du champ magnétique à 100% ; d'autre part, pour un bonne utilisation il est nécessaire d'avoir un champ magnétique d'une longueur appropriée à la puissance de chaque véhicule, ce qui nécessite dans la grande majorité l'installation de plusieurs appareils (suivant la cylindrée du moteur, par exemple 4 pour un camion) entraînant une installation compliquée et coûteuse de surcroît toute les réalisations précédentes ne se sont pas penchés sur les dommages que peuvent occasionner les champs magnétiques vis à vis de certains éléments électroniques qui sont de plus en plus présent dans les nouvelles motorisations. De plus, les aimants utilisés jusqu'alors sont généralement très sensibles aux variations de températures.

Aussi, l'invention a pour but de remédier aux inconvénients ci-dessus et sera mieux comprise en se référant aux figures :

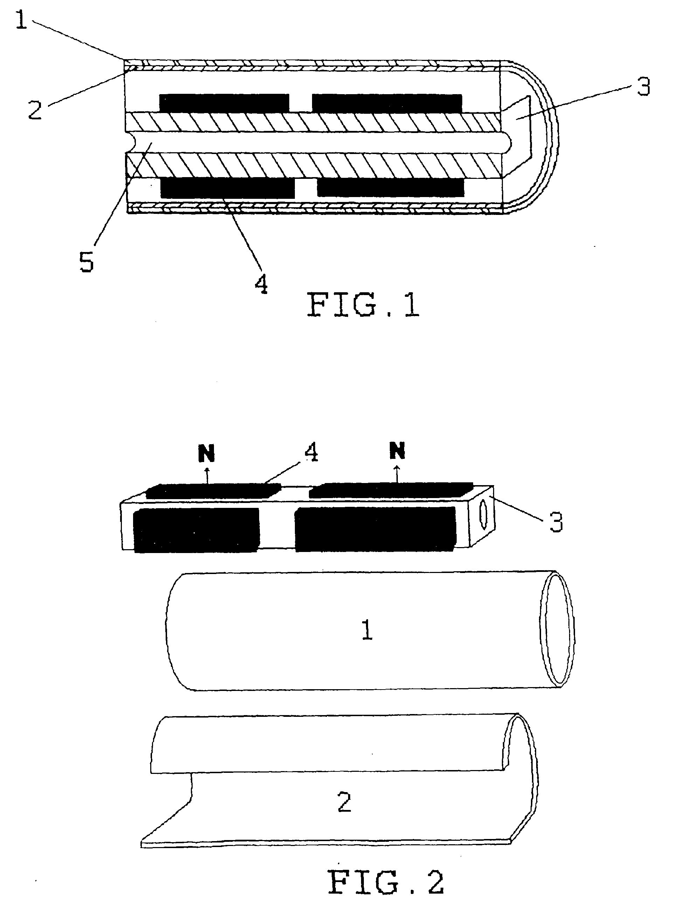

La figure 1 représentant le dispositif selon son ensemble (en coupe longitudinale)
La figure 2 représentant une vue éclatée du dispositif.

Le dispositif est constitué de tube (1) dans lequel est plaqué une feuille (2) le tuyau de carburant passe dans l'alésage (5) au travers du parallélépipède (3),

Les aimants (4) sont collés sur chaque face du parallélépipède (3), le parallélépipède (3) et les aimants (4) sont emprisonnés dans le tube (1) avec de la résine.

Les aimants (4) de type samarium cobalt ont étés spécialement étudiés, ayant une valeur d'induction de 3000 à 5000 GAUSS pour une température ambiante de 20°C.

Ceux-ci peuvent s'utiliser jusqu'à 350°C en n'ayant une perte de rendement que de 0,04% par °C lorsque la température augmente.

Alors que les aimants classiques ont une perte de rendement de 0,2% par degré Celsius lorsque la température augmente soit 5 fois moins efficaces.

Ce point est très important car les moteurs peuvent atteindre facilement des points de chauffe de l'ordre de 180°C.

Ces aimants (4) d'une longueur de 35 à 40 mm, largeur 10 à 12 mm, épaisseur 8 à 10 mm sont collés sur chacune des faces du parallélépipède en PVC (3) de 14 à 15 mm de côté, chaque face sud de l'aimant étant appliquée contre le parallélépipède (3) (percé suivant le diamètre correspondant au tuyau de carburant).

Cet ensemble (3)+(4) est moulé avec de la résine hyper résistante à l'intérieur d'un tube (1) de 38 à 42 mm de diamètre, 2 mm de section et 50 mm à 60 mm de longueur pour un économiseur de carburant type voiture.

A l'intérieur de ce tube (1) il aura été préalablement placé un écran protecteur (2) formé d'une feuille magnétique de 0,5 à0,7 mm d'épaisseur protégeant toute la surface interne du tube (1), cette feuille magnétique ayant le nord dirigé vers le centre du tube (1) a un double avantage son champ magnétique s'opposant à celui des aimants (4) sert d'écran protecteur aux champs magnétiques parasites diffusés vers l'extérieur du dispositif empêchant de par ce fait les perturbations importantes que pourraient subir tous les éléments électroniques qui sont embarqués sur les nouveaux moteurs.

Autre avantage de cet écran : l'opposition de champs magnétiques crée un effet d'accélération à l'intérieur du tube (1) et améliore de ce fait le résultat désiré.

Trois appareils ont été mis au point : le premier s'adresse aux véhicules dont la cylindrée n'excède pas deux litres, il se compose d'un parallélépipède PVC (3). Sur chacune des faces de celui-ci est installé un aimant le tout étant moulé à l'intérieur du tube (1) de longueur 50 à 60 mm. Le deuxième s'adresse aux véhicules dont la cylindrée dépasse deux litres mais dont le poids roulant n'excède pas 3,5 tonnes ; sa composition est faite sur le même principe que précédemment mais sa longueur et son nombre d'aimants sont doublés. Le troisième s'adresse aux véhicules de plus de 3,5 tonnes il se compose d'un parallélépipède (3) PVC percé dans le sens de la longueur (5).

Quatre aimants du même type que précédemment sont installés sur chaque face du parallélépipède (3), soit 16 aimants au total le tout étant moulé dans un tube (1) de 220 à 230 mm de longueur.

## Revendications

1. Dispositif pour faire baisser la consommation d'essence, de gas-oil ou de pétrole liquéfié sur tous les types de moteurs et toutes marques confondues, caractérisé en ce qu'il comporte un tube (1) dans lequel est logé un parallélépipède (3) sur lequel sont collés sur chaque face des aimants (4) et un écran protecteur (2) formé d'une feuille magnétique arrêtant les champs magnétiques parasites vers l'extérieur du dispositif.

2. Dispositif selon la revendication 1, caractérisé en ce que le tube (1) reçoit un écran (2) formé d'une feuille magnétique afin que son champ magnétique s'oppose à celui des aimants (4) pour annuler les champs magnétiques parasites émis par les aimants (4).

3. Dispositif selon la revendication 2, caractérisé en ce que le tube (1) reçoit un écran (2) formé d'une feuille magnétique dont la face nord est dirigée vers le centre dudit tube.

4. Dispositif selon l'une quelconque des revendications précédentes, caractérisé en ce que le parallélépipède (3) est percé sur toute la longueur d'un alésage (5) recevant le tuyau de carburant.

5. Dispositif selon l'une quelconque des revendications précédentes, caractérisé en ce que les aimants (4) collés sur le parallélépipède (3) sont de type samarium cobalt ayant une valeur d'induction de 3000 à 5000 GAUSS pour une température ambiante de 20° Celsius, chaque face sud desdits aimants (4) étant appliquée contre le parallélépipède (3).

6. Dispositif selon l'une quelconque des revendications précédentes, caractérisé en ce que le parallélépipède (3) et les aimants (4) sont moulés avec de la résine.
